# EUROPEAN PATENT APPLICATION

(11) **EP 2 133 389 A1**
(43) Date of publication of application: **16.12.2009**
(21) Application number: 08010739.4
(22) Date of filing: 12.06.2008
(51) Int. Cl.: C08L 23/10, C08J 5/18

(54) **Polypropylene composition**

(71) Applicant: Borealis AG, 1220 Vienna (AT)
(72) Inventor: Grein, Christelle, 4020 Linz (AT); Schedening, Tonja, 4470 Enns (AT); Niedersüss, Peter, 4312 Ried/Riedmark (AT); Pachner, Elke, 4600 Wels (AT)
(74) Representative: Kador & Partner

(57) **Abstract**

The present invention relates to a polypropylene composition comprising a base resin consisting of
- a first propylene homo- or copolymer (A),
- a second propylene homo- or random copolymer (B); and
- a linear low density ethylene homo- or copolymer (C) which has been produced with a single-site catalyst,

wherein
component (B) has a comonomer content of not more than 5 wt.% and a branching index g' of less than 0.9
and
components (A) and (B) are different,
to an article, in particular an article which is and/or comprises a blown film, comprising said polypropylene composition, and to the use of said composition for the production of an article, in particular for the production of a blown film. The invention is furthermore directed to a process for producing a polypropylene composition.

## Description

The invention relates to a propylene composition, its production process, an article made therefrom and the use of the polypropylene composition in various applications, especially blown films.

In many technical fields polyethylenes are replaced by polypropylenes since the new generation of polypropylenes has superior properties compared to customary polyethylene materials.

Well-known polypropylenes of commerce are particularly isotactic, semicrystalline, thermoplastic polymer mixtures. Although the polypropylenes of commerce have many desirable and beneficial properties, like heat resistance and high stiffness, they also possess some important drawbacks such as high viscosity, which results in a reduced throughput in many applications, such as for blown films, extrusion coating, foam extrusion and blow-molding. Further, in the production of blown films, a high stiffness can result in the creation of wrinkles on the film reel as the lay flattening of high stiffness materials is very critical.

EP 1 847 555 describes propylene homo- and copolymers being multibranched, *i.e.* the polypropylene backbone is furnished with a larger number of side chains (branches) and said branches contain further side chains. Although the melt of these polypropylenes has a high strength the throughput for applications like blown films, extrusion coating, foam extrusion, blow-molding etc. can still be improved.

Polypropylenes usually can only be processed with reduced throughput e.g. when producing blown films, in extrusion coating, in foam extrusion and in blow-molding. Blending with high pressure LDPE containing long chain branches usually improves the processability, however, the stiffness and heat resistance decreases.

It is thus an object of the present invention to provide a polypropylene composition which has a good heat resistance, high stiffness and good optical properties and which further can be processed with increased throughput.

It has surprisingly been found, that the object of the present invention can be achieved with a polypropylene composition which comprises a base resin consisting of two different propylene homo- or copolymers (A) & (B) and a linear low density ethylene homo- or copolymer (C) which has been produced with a single-site catalyst.

Therefore, the present invention provides a polypropylene composition comprising a base resin consisting of
- a first propylene homo- or copolymer (A),
- a second propylene homo- or random copolymer (B); and
- a linear low density ethylene homo- or copolymer (C) which has been produced with a single-site catalyst,
wherein
component (B) has a comonomer content of not more than 5 wt.% and a branching index g' of less than 0.9
and
components (A) and (B) are different.

The inventive composition is characterized by good heat resistance, high stiffness and it can be processed with increased throughput. Further, the composition shows good optical properties.

Normally, high pressure LDPE containing long chain branches is used to improve the processability of polypropylenes, especially on blown film lines. However, surprisingly, conventional high pressure LDPE does not or only negligible improve the processability of the mixture of the polypropylene components (A) and (B) of the inventive composition.

LLDPE which has been produced with a single-site catalyst is usually difficult to process due to its low molecular weight and very narrow molecular weight distribution (MWD). Thus, the improvement of the processability of polypropylenes by blending them with LLDPE which has been produced with a single-site catalyst instead of high pressure LLDPE as in the inventive composition could not be expected.

The term "polyolefin" denotes an olefin homo- or copolymer or a mixture of such olefin homo- or copolymers. The term "polypropylene" denotes a propylene homo- or copolymer or a mixture of such propylene homo- or copolymers. The term "polyethylene" denotes an ethylene homo- or copolymer or a mixture of such ethylene homo- or copolymers.

The term "propylene copolymer" includes propylene homopolymers, propylene random copolymers as well as heterophasic propylene copolymers, *i*.*e*. a mixture of a propylene homo- or random copolymer with a propylene/alpha-olefin rubber as well as mixtures of propylene homopolymer, random copolymers and heterophasic propylene copolymers.

"Multimodal" or "multimodal distribution" describes a probability distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another. The molecular weight distribution curve of the resulting final polymer can be calculated by a super-imposing of the molecular weight distribution curves of the polymer fraction which will, accordingly, show a more distinct maxima, or at least be distinctively broadened compared with the curves for individual fractions.

A polymer showing such molecular weight distribution curve is called bimodal or multimodal, respectively.

Preferably, the amount of component (A) is at least 55 wt.%, more preferably at least 60 wt.%, even more preferably is at least 65 wt.% and most preferably is at least 70 wt.% of the base resin.

Further, preferably, the amount of component (A) is not more than 95 wt.%, more preferably is not more than 90 wt.% of the base resin.

Preferably the amount of component (B) is at least 2.5 wt.%, more preferably is at least 5.0 wt.% and most preferably is at least 7.5 wt.% of the base resin.

Further, preferably, the amount of component (B) is not more than 20.0 wt. %, more preferably is not more than 15.0 wt.% and most preferably is not more than 12.5 wt.% of the base resin.

Preferably, the amount of component (C) is up to 25.0 wt.%, more preferably is up to 20.0 wt.% and most preferably is up to 17.5 wt.% of the base resin.

Further, preferably, the amount of component (C) is at least 1.0 wt.%, more preferably is at least 2.5 wt.% of the base resin.

Preferably, the sum of components (A) and (C) is at least 70 wt.%, more preferably at least 80 wt.% and most preferably at least 85 wt.% based on the polypropylene composition.

Further, preferably, the sum of components (A) and (C) is not more than 97.5 %, more preferably not more than 95.0 wt.% and most preferably not more than 92.5 wt.% based on the polypropylene composition.

Preferably, the amount of the base resin is at least 80 wt. %, more preferably at least 85 wt.%, even more preferably at least 90 wt.% and most preferably at least 95 wt.% of the polypropylene composition.

### Component (A)

Component (A) is a propylene homo- or copolymer.

Preferably, component (A) has an intrinsic viscosity (IV) of not more than 4.5 dl/g, more preferably of not more than 4.0 dl/g and most preferably of not more than 3.5 dl/g.

Further, preferably, component (A) has an intrinsic viscosity (IV) of at least 1.2 dl/g, more preferably of at least 1.5 dl/g, even more preferably of at least 1.8 dl/g and most preferably of at least 2.0 dl/g.

Preferably, component (A) has an MFR₂ measured according to ISO 1133, at 230°C and under a load of 2.16 kg, of at least 0.01 g/10 min, more preferably of at least 0.1 g/10 min, even more preferably of at least 0.5 g/10 min, even more preferably of at least 1.0 g/10 min and most preferably of at least 1.5 g/10 min.

Further, preferably, component (A) has an MFR₂ measured according to ISO 1133, at 230°C and under a load of 2.16 kg, of not more than 20.0 g/10 min, more preferably of not more than 10.0 g/10 min and most preferably of not more than 5.0 g/10 min.

Preferably, component (A) has a density of at least 850 kg/m³, more preferably of at least 875 kg/m³ and most preferably of at least 900 kg/m³.

Further, preferably, component (A) has a density of not more than 950 kg/m³, more preferably not more than 925 kg/m³ and most preferably of not more than 910 kg/m³.

Preferably, component (A) has a melting point of at least 140°C, more preferably of at least 150°C and most preferably of at least 160°C.

Preferably, component (A) is a propylene copolymer.

More preferably said propylene copolymer has a comonomer content of not more than 10.0 wt.%, more preferably of not more than 7.5 wt.% and most preferably of not more than 5.0 wt.% based on component (A).

Further, preferably, said propylene copolymer has a comonomer content of at least 1.0 wt.%, more preferably of at least 1.5 wt.% and most preferably of at least 2.0 wt.% based on component (A).

Preferably, component (A) has an impact strength at 23°C of at least 25 kJ/m², more preferably of at least 30 kJ/m² in a Charpy notched test according to ISO 179-1 eA:2000.

Preferably, the comonomers used for the production of component (A) may be selected from but are not limited to ethylene and/or C₄- to C₂₀-alpha-olefins. However, ethylene and/or C₄- to C₂₀-alpha-olefins are preferred, even more preferred are ethylene and/or C₄- to C₁₅-alpha-olefins, even more preferred are ethylene and/or C₄- to C₁₀-alpha-olefins and most preferred are ethylene and/or C₄- to C₆-alpha-olefins.

In addition, preferably the component (A) is alpha-nucleated with a nucleating agent. Such an alpha-nucleation can be carried out by using any suitable alpha-nucleating agent or alpha-nucleating method known in the art.

The alpha-nucleating agent, if present, is preferably selected from the group consisting of sodium benzoate, 1,3:2,4-bis-(3,4-dimethyl-benzylidene)-sorbitol, sodium-2,2'-methylenebis-(4,6-di-tert-butyl-phenyl)-phosphate, hydroxybis-(2,4,8,10-tetra-tert-butyl-6-hydroxy-12h-dibenzo-(d,g)(1,3,2)-dioxaphosphocin-oxidato)-aluminium, ADK STAB NA-21 (Adeka Palmarole, France), Hyperform HPN-20 E (Milliken, USA) or mixtures thereof.

A further and preferred alpha-nucleation method, is a special reactor technique, where the catalyst is prepolymerized with at least one vinyl compound, said method is herein later referred to as "BNT". This method is described in detail in EP 1 028 984 and EP 1 183 307. For the purpose of this invention "BNT" is referred to as alpha-nucleating agent.

Preferred vinyl compounds to be used in the Borstar Nucleation Technology (BNT)-method are represented by the following formula 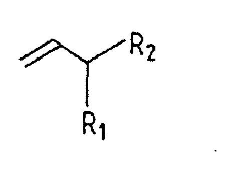 wherein R¹ and R² are independently selected from C₁-C₄-alkyl groups or they form together a saturated, an unsaturated or an aromatic five- or six-membered ring, whereby this ring may be substituted and/or bridged with one or more C₁- or C₂-alkyl groups.

More preferably the vinyl compound is selected from vinyl cycloalkanes, e.g. vinyl cyclopentane, vinyl cyclohexane, vinyl-2-methyl-cyclohexane and vinyl norbonane, 3-methyl-1-butene, styrene, p-methyl-styrene, 3-ethyl-1-hexene or mixtures thereof, particularly preferred is vinyl cyclohexane (VCH).

Preferably, the catalyst is prepolymerised in the BNT method at a temperature significantly below the polymerization temperature.

In case the catalyst is prepolymerised with the BNT method as described above, said prepolymer fraction is preferably present in an amount of up to 1.0 wt. %, more preferably up to 0.5 wt. % and most preferably up to 0.2 wt. % based on component (A).

In case the catalyst is prepolymerised with the BNT method as described above, said prepolymer fraction is preferably present in an amount of at least 0.0001 wt. %, more preferably of at least 0.001 wt. %, even more preferably of at least 0.005 wt. %, and most preferably of at least 0.01 wt.% based on component (A).

More preferably, component (A) is a heterophasic propylene copolymer (AA) comprising
- optionally a prepolymer fraction (A0)
- a propylene homopolymer or random copolymer (A1) as matrix phase;
- a propylene/alpha-olefin copolymer rubber (A2) dispersed in the matrix phase (A1).

Preferably, component (A0), if present, has been prepolymerised with the BNT-method as described above.

It is particular preferred, that the sum of components (A1) and (A2) and, if present, component (A0) make up at least 98.0 wt.%, more preferably at least 99.0 wt. % and most preferably at least 99.5 wt.% of component (AA) and most preferably component (AA) consists of components (A1), (A2) and (A0)

If component (A0) is present in component (AA), preferably, the amount of component (A0) is up to 1.0 wt. %, more preferably up to 0.5 wt. % and most preferably up to 0.2 wt. % based on component (AA).

Further, if component (A0) is present in component (AA), preferably, the amount of component (A0) is at least 0.0001 wt. %, more preferably is at least 0.001 wt. %, even more preferably is at least 0.005 wt. %, and most preferably is at least 0.01 wt.% based on component (AA).

Preferably, in the heterophasic propylene copolymer, component (A1) has a comonomer content of not more than 10 wt.% based on component (A1), more preferably of not more than 5 wt.% based on component (A1), even more preferably of not more than 2 wt.% based on component (A1) and most preferably component (A1) is a propylene homopolymer.

Preferably, component (A1) has an MFR₂, measured according to ISO 1133 at 230°C and under a load of 2.16 kg, of at least 0.5 g/10 min, more preferably of at least 1.0 g/10 min and most preferably of at least 1.5 g/10 min.

Preferably, component (A1) has an MFR₂, measured according to ISO 1133 at 230°C and under a load of 2.16 kg, of not more than 30 g/10 min, more preferably of not more than 20 g/10 min and most preferably of not more than 10 g/10 min.

Preferably, component (A1) is present in an amount of at least 75.0 wt.%, more preferably of at least 80.0 wt.% and most preferably of at least 82.5 wt.% based on component (AA).

Further preferably, component (A1) is present in an amount of not more than 95.0 wt.%, more preferably of not more than 92.5 wt.% and most preferably of not more than 90.0 wt.% based on component (AA).

Preferably, component (A1) has an intrinsic viscosity (IV) of not more than 4.5 dl/g, more preferably of not more than 4.0 dl/g and most preferably of not more than 3.5 dl/g.

Further, preferably, component (A1) has an intrinsic viscosity (IV) of at least 1.5 dl/g, more preferably of at least 1.8 dl/g and most preferably of at least 2.0 dl/g.

Preferably, the comonomers used for the production of component (A2) may be selected from but are not limited to ethylene and/or C₄- to C₂₀-alpha-olefins. However, ethylene and/or C₄- to C₂₀-alpha-olefins are preferred, even more preferred are ethylene and/or C₄- to C₁₅-alpha-olefins, even more preferred are ethylene and/or C₄- to C₁₀-alpha-olefins, e.g. ethylene, 1-butene, 1-hexene, 1-octene, and most preferably the alpha-olefin is ethylene.

Preferably, component (A2) has a comonomer content of not more than 50 wt.%, more preferably of not more than 45 wt.% and most preferably of not more than 40 wt.% based on component (A2).

Preferably, component (A2) has a comonomer content of at least 15 wt.%, more preferably of at least 20 wt.% based on component (A2).

Further, preferably, the amount of component (A2), determined as xylene solubles (XS), is not more than 25.0 wt.%, more preferably not more than 20.0 wt.% and most preferably not more than 17.5 wt.% based on component (AA).

Preferably, the amount of component (A2), determined as xylene solubles (XS), is at least 5.0 wt.%, more preferably is at least 7.5 wt.% and most preferably is at least 10 wt.% based on component (AA).

Further, preferably, the intrinsic viscosity (IV) of component (A2) is at least 0.8 dl/g, more preferably is at least 1.0 dl/g, and most preferably is at least 1.2 dl/g, component (A2) being measured as xylene soluble fraction as described above.

Further, preferably, the intrinsic viscosity (IV) of component (A2) is not more than 2.5 dl/g, more preferably is not more than 2.3 dl/g and most preferably is not more than 2.1 dl/g, component (A2) being measured as xylene soluble fraction as described above.

Further, preferably, the ratio IV(A2)/)V(A1) is not higher than 0.85 and more preferably not higher than 0.80.

Preferably, component (A2) is dispersed within the component (A1), or if component (A0) is present, in the mixture of components (A1) and (A0), preferably in the form of particles, more preferably said particles have a weight average particle size of less than 1.00 µm, more preferably less than 0.50 µm; further, preferably, said particles have a weight average particle size of at least 0.05 µm, more preferably of at least 0.10 µm.

A suitable method for determining this weight average particle size is described in the paper "Characterization of Modified Polypropylene by Scanning Electron Microscopy" by Pölt P, Ingolic E, Gahleitner M, Bernreitner K, Geymayer W, J. Appl. Polym. Sci. 78, (2000), 1152 ff.

For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. Preferably the slurry reactor comprises (is) a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system used for the production of component (A) can comprise one or more conventional stirred tank slurry reactors or loop reactors, as described in WO 94/26794, and/or one or more gas phase reactors.

Preferably the reactors used for the production of component (A) are selected from the group of loop and gas phase reactors and, in particular, the process employs at least one loop reactor and at least one gas phase reactor. In case component (A) is a heterophasic propylene copolymer (AA), preferably component (A1) is produced in at least one loop reactor and component (A2) is produced in at least one gas phase reactor.

A suitable catalyst for the polymerization of component (A) is any stereospecific catalyst for propylene polymerization which is capable of polymerizing and copolymerizing propylene and comonomers at a temperature of 40 to 110 °C and at a pressure from 10 to 100 bar. Ziegler Natta catalysts as well as metallocene catalysts are suitable catalysts.

For the preparation of component (A), the catalyst is preferably introduced into the first reactor only. The components of the catalyst can be fed into the reactor separately or simultaneously or the components of the catalyst system can be precontacted prior to the reactor.

A suitable propylene composition usable as component (A) and the process for its production is described in EP 1 661 935.

### Component (B)

Component (B) is a propylene homo- or random copolymer with a comonomer content of not more than 5 wt.% and a branching index g' of less than 0.9.

Preferably, component (B) has an MFR₂ measured according to ISO 1133, at 230°C and under a load of 2.16 kg, of at least 0.01 g/10 min, more preferably of at least 0.2 g/10 min, even more preferably of at least 1.0 g/10 min, even more preferably of at least 2.0 g/10 min and most preferably of at least 4.0 g/10 min.

Further, preferably, component (B) has an MFR₂ measured according to ISO 1133, at 230°C and under a load of 2.16 kg, of not more than 1000 g/10 min, even more preferably of not more than 100 g/10 min more preferably of not more than 50 g/10 min, even more preferably of not more than 25 g/10 min and most preferably of not more than 10.0 g/10 min.

Preferably the cross-linked fraction of the polypropylene (B) does not exceed 1.0wt.-%, even more preferred does not exceed 0.8wt.-%, still more preferred does not exceed 0.5 wt.-% determined as the relative amount of polymer insoluble in boiling xylene (xylene hot insoluble fraction, XHI).

Preferably, component (B) has a density of at least 850 kg/m³, more preferably of at least 875 kg/m³ and most preferably of at least 900 kg/m³.

Further, preferably, component (B) has a density of not more than 950 kg/m³, more preferably of not more than 925 kg/m³ and most preferably of not more than 910 kg/m³.

Preferably, component (B) has a melting point of at least 140°C, more preferably of at least 150°C and most preferably of at least 160°C.

More preferably, component (B) has a pentade concentration, of more than 90 %, more preferably of more than 92 % , even more preferably of more than 93 % and most preferably of more than 95 %. The pentade concentration is an indicator for the narrowness in the regularity distribution of the polypropylene.

Preferably, component (B) has a melt strength of at least 5.0 cN at a maximum speed of at least 100 mm/s, more preferably of at least 10 cN at a maximum speed of at least 200 mm/s.

The measuring of the melt strength has been undertaken by a temperature of 200 °C with an acceleration of the melt strand drawn down of 120 mm/s². The exact measuring method is defined in the example section.

The high melt strength is preferably achieved by a certain degree of branching of the propylene polymer.

A parameter of the degree of branching is the branching index g'. The branching index g' correlates with the amount of branches of a polymer. The branching index g' is defined as g'=[IV]_{br}/[IV]ₗᵢₙ in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W. H. Stockmeyer, J. Chem. Phys. 17,1301 (1949).

The intrinsic viscosity needed for determining the branching index g' is measured according to DIN ISO 1628/1, October 1999 (in Decalin at 135 °C).

Thus, the branching index g' of the polypropylene (B) is less than 0.90, more preferably not more than 0.80, more preferably not more than 0.70.

Possible types of branching are
a) single branched polypropylenes ("Y propylenes") having a backbone with a single long side-chain and an architecture which resembles a "Y"
b) polypropylene types in which polymer chains are coupled with a bridging group (an architecture which resembles a "H")
c) multi-branched polypropylenes, i.e. not only the polypropylene backbone is furnished with a larger number of side chains (branched polypropylene) but also some of the side chains themselves. Such polypropylenes are characterized by rather high melt strength.

Polypropylenes of type a) and b) are for instance described in EP 0 787 750, polypropylenes of type c) are described in EP 1 903 070.

The homopolymer can be unimodal or multimodal. In case the homopolymer is multimodal, it is preferably bimodal.

In case component (B) is a random copolymer any comonomers used for the production of random copolymers known in the art may be used, however, ethylene and/or C₄- to C₂₀-alpha-olefins are preferred, even more preferred are ethylene and/or C₄- to C₁₅-alpha-olefins, even more preferred are ethylene and/or C₄- to C₁₀-alpha-olefins, even more preferred are ethylene and/or C₄- to C₆-alpha-olefins, and most preferred is 1-hexene.

Further, the random copolymer has a comonomer content of not more than 5.0 wt. %, preferably of not more than 4.0 wt.% and more preferably of not more than 3.0 wt.%.

Preferably, the random copolymer has a comonomer content of at least 1.0 wt.%, more preferably of at least 1.5 wt.%.

The random copolymer can be unimodal or multimodal. In case the random copolymer is multimodal, it is preferably bimodal.

Preferably, component (B) is a propylene homopolymer.

Any process for the production of polypropylenes which is known in the art may be used for the production of component (B).

It is preferred that the process temperature is higher than 60 °C. Preferably, the process is a multi-stage process to obtain a multimodal polypropylene as defined above.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene according to this invention is produced preferably in a multi-stage process in a multi-stage reaction sequence as described in WO 92/12182.

It has previously been known to produce multimodal, in particular bimodal, polypropylene in two or more reactors connected in series, i.e. in different steps (a) and (b).

According to the present invention, the main polymerization stages are preferably carried out as a combination of a bulk polymerization/gas phase polymerization.

The bulk polymerizations are preferably performed in a so-called loop reactor.

In order to produce the multimodal polypropylene according to this invention, a flexible mode is preferred. For this reason, it is preferred that the composition be produced in two main polymerization stages in combination of loop reactor/gas phase reactor.

Optionally, and preferably, the process may also comprise a prepolymerization step as defined above and which may precede the polymerization step (a).

The process is preferably a continuous process.

Preferably, in the process for producing the propylene polymer as defined above the conditions for the bulk reactor of step (a) may be as follows:
- the temperature is within the range of 40°C to 110°C, preferably between 60 °C and 100 °C, more preferably between 70 to 90 °C,
- the pressure is within the range of 20 bar to 80 bar, preferably between 30 bar to 60 bar,
- hydrogen can be added for controlling the molar mass in a manner known per se.

Subsequently, the reaction mixture from the bulk (bulk) reactor (step a) is transferred to the gas phase reactor, i.e. to step (b), whereby the conditions in step (b) are preferably as follows:
- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The residence time can vary in both reactor zones. Preferably in the process for producing the propylene polymer of the invention the residence time in bulk reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the bulk, preferably loop reactor, and/or as a condensed mode in the gas phase reactor.

A polypropylene suitable as component (B) can be obtained as described in the following.

Accordingly the polypropylene (B) can be the result of treating an unmodified polypropylene (B') with thermally decomposing radical-forming agents and/or with ionizing radiation, where both treatments may optionally be accompanied or followed by a treatment with bi- or multifunctionally unsaturated monomers, e.g. butadiene, isoprene, dimethylbutadiene or divinylbenzene. A suitable method to obtain the polypropylene (B) is for instance disclosed in EP 0 879 830 A1 and EP0890612A2.

The unmodified polypropylene (B') has preferably an MFR₂ (230°C) in a range of 0.05 to 45.00 g/10 min. More preferably the MFR₂ (230°C) is in a range of 0.05 to 35.00 g/10 min in case the unmodified polypropylene (B') is a homopolymer. On the other hand the MFR₂ (230 °C) is in a range of 0.05 to 45.00 g/10 min in case the unmodified polypropylene (B') is a copolymer.

Preferably the unmodified polypropylene (B') has a comonomer content from 0.1 to 15.0wt.% of ethylene and or C₄- to C₁₈- alpha-olefins, in particular ethylene.

Moreover unmodified polypropylene (B') has preferably a rather broad molecular weight distribution (MWD), more preferably the unmodified polypropylene (B') is multimodal, even more preferably bimodal.

Moreover the unmodified polypropylene (B') has preferably a weight average molecular weight (M_{w}) of 500,000 to 1,500,000 g/mol, more preferably in the range of 600,000 to 1,000,000 g/mol. The number average molecular weight (Mₙ) preferably ranges of 25,000 to 100,000 g/mol and more preferably of 30,000 to 100,000 g/mol.

The peroxide used for the manufacture of polypropylene (B) is preferably a thermally decomposing free radical-forming agent, more preferably selected from the group consisting of acyl peroxide, alkyl peroxide, hydroperoxide, perester and peroxycarbonate.

The following listed peroxides are in particular preferred:
Acyl peroxides: benzoyl peroxide, 4-chlorobenzoyl peroxide, 3-methoxybenzoyl peroxide and/or methyl benzoyl peroxide.
Alkyl peroxides: allyl *tert*-butyl peroxide, 2,2-bis(*tert*-butylperoxybutane), 1,1-bis(*tert*-butylperoxy)-3,3,5-trimethylcyclohexane, n-butyl-4,4-bis(*tert* butylperoxy) valerate, diisopropylaminomethyl-*tert-*amyl peroxide, dimethylaminomethyl-*tert-*amyl peroxide, diethylaminomethyl-*tert-*butyl peroxide, dimethylaminomethyl-*tert-*butyl peroxide, 1,1-di-(*tert-*amylperoxy)cyclohexane, *tert*-amyl peroxide, *tert*-butylcumyl peroxide, *tert*-butyl peroxide and/or 1-hydroxybutyl n-butyl peroxide.
Peresters and peroxy carbonates: butyl peracetate, cumyl peracetate, cumyl perpropionate, cyclohexyl peracetate, di-*tert*-butyl peradipate, di-*tert*-butyl perazelate, di*-tert-*butyl perglutarate, di-*tert*-butyl perthalate, di-*tert*-butyl persebacate, 4-nitrocumyl perpropionate, 1-phenylethyl perbenzoate, phenylethyl nitro-perbenzoate, *tert*-butylbicyclo-(2,2,1)heptane percarboxylate, *tert*-butyl-4-carbomethoxy perbutyrate, *tert*-butylcyclobutane percarboxylate, *tert*-butylcyclohexyl peroxycarboxylate, *tert*-butylcyclopentyl percarboxylate, *tert-*butylcyclopropane percarboxylate, *tert*-butyldimethyl percinnamate, *tert-*butyl-2-(2,2-diphenylvinyl) perbenzoate, *tert*-butyl-4-methoxy perbenzoate, *tert*-butylperbenzoate, *tert*-butylcarboxycyclohexane, *tert-*butyl pernaphthoate, *tert*-butyl peroxyisopropylcarbonate, *tert-*butyl pertoluate, *tert*-butyl-1-phenylcyclopropyl percarboxylate, *tert-*butyl-2-propylperpentene-2-oate, *tert*-butyl-1-methylcyclopropyl percarboxylate, *tert*-butyl-4-nitrophenyl peracetate, *tert-*butylnitrophenyl peroxycarbamate, *tert-*butyl-N-succiimido percarboxylate, *tert-*butyl percrotonate, *tert-*butyl permaleic acid, *tert-*butyl permethacrylate, *tert-*butyl peroctoate, *tert-*butyl peroxyisopropylcarbonate, *tert-*butyl perisobutyrate, *tert-*butyl peracrylate and/or *tert-*butyl perpropionate;
or mixtures of these above listed free radical-forming agents.

If present in the process for the manufacture of the polypropylene (B), the (volatile) bifunctional monomers are preferably ethylenically unsaturated, multifunctional monomers, like C₄- to C₁₀- dienes and/or C₇- to C₁₀- divinyl compounds. Especially preferred bifunctional monomers are butadiene, isoprene, dimethylbutadiene and divinylbenzene.

The polypropylene (B) is preferably obtained by a process as described in EP 0 879 830 A1 and EP 0 890 612 A2. Accordingly the polypropylene is produced by
(a) mixing
   (i) a unmodified propylene homopolymer and/or copolymer (B') as defined above,
   (ii) from 0.05 to 3 wt.-% based on the components of (i) and (ii), of free radical-forming agents as defined above, and
   (iii) optionally diluted with inert solvents,
(b) heating to 30-100 °C, preferably to 60-90 °C,
(c) sorption during a sorption time τ of volatile bifunctional monomers, preferably ethylenically unsaturated, multifunctional monomers, like C₄- to C₁₀- dienes and/or C₇- to C₁₀- divinyl compounds, by the unmodified propylene homopolymer and/or copolymer (B'), preferably unmodified propylene homopolymer (B'), from the gas phase at a temperature of from 20 to 120°C, preferably of from 60 to 100 °C, where the amount of the absorbed bifunctionally unsaturated monomers is from 0.01 to 10.00 wt.-%, preferably from 0.05 to 2.00 wt.-%, based on the unmodified propylene homopolymer and/or copolymer (B'),
(d) heating and melting the polypropylene composition in an atmosphere comprising inert gas and/or the volatile bifunctional monomers, from sorption temperature to 210°C, whereupon the free-radical generators are decomposed and then
(e) heating the melt up to 280 °C in order to remove unreacted monomers and decomposition products, and
(f) agglomerating the melt.

Usual amounts of auxiliary substances, which may range from 0.01 to 2.5% by weight of stabilizers, 0.01 to 1% by weight of processing aids, 0.1 to 1% by weight of antistats, 0.2 to 3% by weight of pigments and up to 3% by weight of α-nucleating agents, in each case based on the sum of the propylene polymers, may be added before step a) and/or f) of the method and/or before or during step d) and/or e) of the above described method.

The process for producing the modified propylene polymer preferably is a continuous method, performed in continuous reactors, mixers, kneaders and extruders. Batchwise production of the modified propylene polymer however is feasible as well.

Preferably, the sorption times τ is from 10 to 1000 s, more preferably τ is from 60 to 600.

Polypropylene (B) can also be produced in the presence of a metallocene catalyst, as, for example, described in EP 1 892 264 using a catalyst system comprising an asymmetric catalyst, whereby the catalyst system has a porosity of less than 1.40 ml/g, more preferably less than 1.30 ml/g and most preferably less than 1.00 ml/g. The porosity has been measured according to DIN 66135 (N₂). In another preferred embodiment the porosity is not detectable when determined with the method applied according to DIN 66135 (N₂).

An asymmetric catalyst is a metallocene compound comprising at least two organic ligands which differ in their chemical structure. More preferably the asymmetric catalyst is a metallocene compound comprising at least two organic ligands which differ in their chemical structure and the metallocene compound is free of C₂-symmetry and/or any higher symmetry. Preferably the asymmetric metallocene compound comprises only two different organic ligands, still more preferably comprises only two organic ligands which are different and linked via a bridge.

Said asymmetric catalyst is preferably a single site catalyst (SSC).

Furthermore it is preferred, that the catalyst system has a surface area of less than 25 m²/g, yet more preferred less than 20 m²/g, still more preferred less than 15 m²/g, yet still less than 10 m²/g and most preferred less than 5 m²/g. The surface area according to this invention is measured according to ISO 9277 (N₂).

It is in particular preferred that the catalytic system comprises an asymmetric catalyst, i.e. a catalyst as defined below, and has porosity not detectable when applying the method according to DIN 66135 (N₂) and has a surface area measured according to ISO 9277 (N₂) less than 5 m²/g.

Preferably the asymmetric catalyst compound, i.e. the asymmetric metallocene, has the formula (I):

(Cp)₂R_{z}MX₂ (I)

wherein
z is 0 or 1,
M is Zr, Hf or Ti, more preferably Zr, and
X is independently a monovalent anionic ligand, such as σ-ligand
R is a bridging group linking the two Cp ligands
Cp is an organic ligand selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl,
with the proviso that both Cp-ligands are selected from the above stated group and both Cp-ligands have a different chemical structure.

The term "σ-ligand" is understood in the whole description in a known manner, i.e. a group bonded to the metal at one or more places via a sigma bond. Preferred monovalent anionic ligands are halogenes, in particular chlorine (Cl).

Preferably, the asymmetric catalyst is of formula (I) indicated above,
wherein
M is Zr and
each X is Cl.

Preferably both Cp-ligands are selected from one of the groups of substituted cyclopentadienyl, substituted indenyl, substituted tetrahydroindenyl, and substituted fluorenyl and wherein the Cp-ligands differ in the substituents bonded to the rings to obtain an asymmetric structure.

The optional one or more substituent(s) bonded to cyclopentadienyl, indenyl, tetrahydroindenyl, or fluorenyl may be independently selected from a group including halogen, hydrocarbyl (e.g. C₁- to C₂₀-alkyl, C₂- to C₂₀-alkenyl, C₂- to C₂₀-alkynyl, C₃- to C₁₂-cycloalkyl, C₆- to C₂₀-aryl or C₇-to C₂₀-arylalkyl), C₃- to C₁₂-cycloalkyl which contains 1, 2, 3 or 4 heteroatom(s) in the ring moiety, C₆- to C₂₀-heteroaryl, C₁- to C₂₀-haloalkyl, -SiR"₃, -OSiR"₃, -SR", -PR"₂ and -NR"₂, wherein each R" is independently a hydrogen or hydrocarbyl, e.g. C₁- to C₂₀-alkyl, C₂- to C₂₀-alkenyl, C₂- to C₂₀-alkynyl, C₃- to C₁₂-cycloalkyl or C₆- to C₂₀-aryl.

More preferably both Cp-ligands are indenyl moieties wherein each indenyl moiety bear one or two substituents as defined above. More preferably each Cp-ligand is an indenyl moiety bearing two substituents as defined above, with the proviso that the substituents are chosen in such are manner that both Cp-ligands are of different chemical structure, i.e. both Cp-ligands differ at least in one substituent bonded to the indenyl moiety, in particular differ in the substituent bonded to the five member ring of the indenyl moiety.

Still more preferably both Cp are indenyl moieties wherein the indenyl moieties comprise at least at the five membered ring of the indenyl moiety, more preferably at 2-position, a substituent selected from the group consisting of alkyl, such as C₁- to C₆- alkyl, e.g. methyl, ethyl, isopropyl, and trialkyloxysiloxy, wherein each alkyl is independently selected from C₁- to C₆- alkyl, such as methyl or ethyl, with proviso that the indenyl moieties of both Cp chemically differ from each other, i.e. the indenyl moieties of both Cp comprise different substituents.

Still more preferred both Cp are indenyl moieties wherein the indenyl moieties comprise at least at the six membered ring of the indenyl moiety, more preferably at 4-position, a substituent selected from the group consisting of a C₆- to C₂₀- aromatic ring moiety, such as phenyl or naphthyl, preferably phenyl, which is optionally substituted with one or more substituents, such as C₁- to C₆- alkyl, and a heteroaromatic ring moiety, with proviso that the indenyl moieties of both Cp chemically differ from each other, i.e. the indenyl moieties of both Cp comprise different substituents.

Yet more preferably both Cp are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as C₁- to C₆- alkyl, e.g. methyl, ethyl, isopropyl, and trialkyloxysiloxy, wherein each alkyl is independently selected from C₁- to C₆- alkyl, such as methyl or ethyl, and the further substituent of the six membered ring is selected from the group consisting of a C₆- to C₂₀- aromatic ring moiety, such as phenyl or naphthyl, preferably phenyl, which is optionally substituted with one or more substituents, such as C₁- to C₆- alkyl, and a heteroaromatic ring moiety, with proviso that the indenyl moieties of both Cp chemically differ from each other, i.e. the indenyl moieties of both Cp comprise different substituents. It is in particular preferred that both Cp are idenyl rings comprising two substituents each and differ in the substituents bonded to the five membered ring of the indenyl rings.

Concerning the moiety "R" it is preferred that "R" has the formula (II)

-Y(R')₂- (II)

wherein
Y is C, Si or Ge, and

R' is C₁- to C₂₀- alkyl, C₆- to C₁₂- aryl, or C₇- to C₁₂- arylalkyl or trimethylsilyl.

In case both Cp-ligands of the asymmetric catalyst as defined above, in particular case of two indenyl moieties, are linked with a bridge member R, the bridge member R is typically placed at 1-position. The bridge member R may contain one or more bridge atoms selected from e.g. C, Si and/or Ge, preferably from C and/or Si. One preferable bridge R is - Si(R')₂-, wherein R' is selected independently from one or more of e.g. trimethylsilyl, C₁- to C₁₀- alkyl, C₁- to C₂₀- alkyl, such as C₆- to C₁₂- aryl, or C₇- to C₄₀-, such asC₇- to C₁₂- arylalkyl, wherein alkyl as such or as part of arylalkyl is preferably C₁- to C₆- alkyl, such as ethyl or methyl, preferably methyl, and aryl is preferably phenyl. The bridge -Si(R')₂- is preferably e.g. -Si(C₁- to C₆- alkyl)₂-, -Si(phenyl)₂- or -Si(C₁- to C₆- alkyl)(phenyl)-, such as -Si(Me)₂-.

More preferably, the asymmetric catalyst, i.e. the asymmetric metallocene, is defined by the formula (III)

(Cp)₂R₁ZrCl₂ (III)

wherein
both Cp coordinate to M and are selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl,
with the proviso that both Cp-ligands are of different chemical structure, and
R is a bridging group linking two ligands L,
wherein R is defined by the formula (II)

-Y(R')₂- (II)

wherein
Y is C, Si or Ge, and
R' is C₁- to C₂₀- alkyl, C₆- to C₁₂- aryl, or C₇- to C₁₂- arylalkyl.

More preferably the asymmetric catalyst is defined by the formula (III), wherein both Cp are selected from the group consisting of substituted cyclopentadienyl, substituted indenyl, substituted tetrahydroindenyl, and substituted fluorenyl.

Yet more preferably the asymmetric catalyst is defined by the formula (III), wherein both Cp are selected from the group consisting of substituted cyclopentadienyl, substituted indenyl, substituted tetrahydroindenyl, and substituted fluorenyl
with the proviso that both Cp-ligands differ in the substituents, i.e. the substituents as defined above, bonded to cyclopentadienyl, indenyl, tetrahydroindenyl, or fluorenyl.

Still more preferably the asymmetric catalyst is defined by the formula (III), wherein both Cp are indenyl and both indenyl differ in one substituent, i.e. in a substituent as defined above bonded to the five member ring of indenyl.

It is in particular preferred that the asymmetric catalyst is a non-silica supported catalyst as defined above, in particular a metallocene catalyst as defined above.

Preferably, the asymmetric catalyst is dimethylsilyl [(2-methyl-(4'-*tert-*butyl)-4-phenyl-indenyl) (2-isopropyl-(4'-*tert-*butyl)-4-phenyl-indenyl)]zirconium dichloride (IUPAC: dimethylsilandiyl [(2-methyl-(4'-*tert-*butyl)-4-phenyl-indenyl)(2-isopropyl-(4'-*tert-*butyl)-4-phenyl-indenyl)]zirconium dichloride). More preferred said asymmetric catalyst is not silica supported.

The above described asymmetric catalyst components are prepared according to the methods described in WO 01/48034.

It is in particular preferred that the asymmetric catalyst system is obtained by the emulsion solidification technology as described in WO 03/051934. Hence the asymmetric catalyst is preferably in the form of solid catalyst particles, obtainable by a process comprising the steps of
a) preparing a solution of one or more asymmetric catalyst components;
b) dispersing said solution in a solvent immiscible therewith to form an emulsion in which said one or more catalyst components are present in the droplets of the dispersed phase,
c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably C₃-to C₃₀- perfluoroalkanes, C₃- to C₃₀- alkenes or C₃- to C₃₀- cycloalkanes, more preferred C₄- to C₁₀- perfluoro-alkanes, C₄- to C₁₀- alkenes or C₄- to C₁₀- cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi- or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (B) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated C₁- to C₃₀- alcohol, which reacts e.g. with a cocatalyst component, such as aluminoxane.

In principle any solidification method can be used for forming the solid particles from the dispersed droplets. Preferably the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40°C, preferably more than 50 °C within less than 10 seconds, preferably less than 6 seconds.

The recovered particles preferably have an average size range of 5 to 200 µm, more preferably 10 to 100 *µ*m.

Moreover, the form of solidified particles have preferably a spherical shape, a predetermined particles size distribution and a surface area as mentioned above of preferably of less than 25 m²/g, still more preferably of less than 20 m²/g, yet more preferably of less than 15 m²/g, yet still more preferably of less than 10 m²/g and most preferably of less than 5 m²/g, wherein said particles are obtained by the process as described above.

For further details and examples of the continuous and dispersed phase system, emulsion formation method, emulsifying agent and solidification methods reference is made e.g. to the above cited international patent application WO 03/051934.

As mentioned above the catalyst system may further comprise an activator as a cocatalyst, as described in WO 03/051934.

Preferred as cocatalysts for metallocenes and non-metallocenes, if desired, are the aluminoxanes, in particular the C₁- to C₁₀-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further, suitable aluminoxane cocatalysts are described *inter alia* in WO 94/28034. These are linear or cyclic oligomers of having up to 40, preferably 3 to 20, -(AI(R"')O)- repeat units (wherein R"' is hydrogen, C₁-to C₁₀-alkyl (preferably methyl) or C₆- to C₁₈-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of the preferred aluminoxanes, such as methylaluminumoxane (MAO), the amount of Al, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. In case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

The process for producing polypropylene (B) using the above defined metallocene catalyst is preferably a multi-stage process.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene (B) is produced preferably in a multi-stage process in a multi-stage reaction sequence as described in WO 92/12182.

A suitable polymer usable as component (B) and a process for its preparation is described in EP 1 892 264.

### Component (C)

Component (C) is a linear low density ethylene homo- or copolymer (C) which has been produced with a single-site catalyst, preferably, component (C) is a linear low density ethylene compolymer.

Polyethylenes produced with a single-site catalyst usually have a narrower molecular weight distribution (MWD) and are substantially linear, i.e. do not contain long chain branches. If an ethylene copolymer is produced with a single-site catalyst the comonomers are more statistically distributed in the polymer chain. Thus, polyethylenes differ in their chemical structure from polyetylenes produced with Ziegler-Natta catalyst which produce a broader MWD and a less statistical comonomer distribution and from polyethylenes produced by a radical initiated high pressure process which have a large amount of long chain branches.

Preferably, component (C) has an MFR₂ measured according to ISO 1133 at 190°C and under a load of 2.16 kg, of at least 0.01 g/10 min, more preferably of at least 0.1 g/10 min, even more preferably of at least 0.5 g/10 min and most preferably of at least 0.9 g/10 min.

Further, preferably, component (C) has an MFR₂ measured according to ISO 1133 at 190°C and under a load of 2.16 kg, of not more than 10.0 g/10 min, more preferably of not more than 5.0 g/10 min, even more preferably of not more than 3.5 g/10 min and most preferably of not more than 2.0 g/10 min.

Preferably, component (C) has a density of at least 900 kg/m³, more preferably of at least 910 kg/m³ and most preferably of at least 915 kg/m³.

Further, preferably, component (C) has a density of not more than 940 kg/m³, more preferably of not more than 935 kg/m³ and most preferably of not more than 930 kg/m³.

Preferably, component (C) has a melting point of at least 110°C, more preferably of at least 115°C.

Preferably, component (C) is an ethylene copolymer.

More preferably, said copolymer has a comonomer content of not more than 15.0 wt.%, more preferably of not more than 10.0 wt.% and most preferably of not more than 7.0 wt.% based on component (C).

Further, preferably, said copolymer has a comonomer content of at least 1.0 wt.%, more preferably of least 2.0 wt.% and most preferably of least 3.0 wt.%

Preferably, the comonomers used for the production of component (C) may be selected from but are not limited to C₃- to C₂₀-alpha-olefins. However, the use of one or more of C₃- to C₂₀-alpha-olefins is preferred, even more preferred is the use of one or more of C₃- to C₁₅-alpha-olefins, even more preferred is the use of one or more of C₄- to C₁₀-alpha-olefins, *e*.*g*. 1-butene, 1-hexene, 1-octene or a mixture thereof, and most preferred is the use of a C₄- to C₆-alpha-olefin, *e*.*g*. 1-hexene.

Component (C) may be unimodal or multimodal. In case component (C) is multimodal it is preferably bimodal.

For the production of component (C) among single-site catalysts metallocene catalysts are especially preferred. Suitable catalysts and their preparation are described in EP 260 130, WO/97/28170, WO/98/46616, WO/98/49208, WO/99/12981, WO/99/19335, EP 836 608, WO/98/56831, WO/00/34341, EP 423 101, EP 537 130 and WO/00/40620.

Preferably, a hafnium metallocene catalyst, e.g. bis(n-butylcyclopentadienyl)hafnium dichloride or bis(n-butylcyclopentadienyl)hafnium dibenzyl is used.

Suitable polymers to be used as component (C) and their preparation are described in EP 1 472 298 and WO/06/045501.

### Polypropylenes composition

Preferably, the polypropylene composition has an MFR₂ measured according to ISO 1133, at 230°C and under a load of 2.16 kg, of at least 0.1 g/10 min, more preferably of at least 0.5 g/10 min and most preferably of at least 1.0 g/10 min.

Further, preferably, the polypropylene composition has an MFR₂ measured according to ISO 1133, at 230°C and under a load of 2.16 kg, of not more than 20 g/10 min, more preferably of not more than 10 g/10 min and most preferably of not more than 20 g/10 min.

Preferably, the polypropylene composition has a melting point of at least 150 °C, more preferably of at least 155 °C and most preferably of at least 160 °C.

Moreover, the polypropylene composition of the invention may further contain various additives, such as miscible thermoplastics, antioxidants, UV-stabilizers, lubricants, nucleating agents, fillers, colouring agents, processing aids and foaming agents which can be added to the composition before, during or after the blending or later during the production of finished or semi-finished articles, e.g. films in an amount of up to 5.0 wt%, preferably up to 3.0 wt% based on the total polymer composition.

The invention is furthermore directed to a process for producing the polypropylene composition according to the invention.

The inventive polypropylene composition can be produced by any suitable melt mixing process at temperatures above the melting point of the respective polypropylene composition. Typical devices for performing said melt mixing process are twin screw extruders, single screw extruders optionally combined with static mixers, chamber kneaders like Farell kneaders and reciprocating co-kneaders like Buss co-kneaders. Preferably, the melt mixing process is carried out in a twin screw extruder with high intensity mixing segments and preferably at a temperature of 170 to 270 °C, more preferably of 180 to 250 °C.

The inventive polypropylene composition may also be compounded just prior being further processed into the desired article, i.e. the polymer is directly fed from the melt mixing process in molten state to the next processing step, e.g. a film blowing machine. Said melt mixing process can be carried out as described above, preferably in a single screw extruder, optionally comprising a static mixer, is used, preferably at a temperature from 170 to 270 °C, more preferably from 180 to 250 °C.

The invention is furthermore directed to an article comprising the polypropylene composition according to the invention. Preferably, said article is and/or comprises a blown film.

Possible articles for which the inventive blown film and or the polypropylene composition can be used are lamination films, general packaging films, like bread bags, pouches and medical/hygienic films.

Preferably, said blown film is manufactured by extrusion of the polypropylene composition as defined herein by conventional blown film extrusion, i.e. the polypropylene composition is extruded through a die, preferably circular die, followed by "bubble-like" expansion. The blown films according to this invention are preferably produced on a single screw extruder with a barrel diameter of 70 mm and a round-section die of 200 mm with 1 mm die gap in combination with a monolip cooling ring and internal bubble cooling (IBC). Melt temperature is preferably 210 °C in the die; the temperature of the cooling air is kept preferably at 15 °C and the blow up ratio (BUR) is preferably 3:1. Moreover it is preferred that a film thickness of 50 µm is adjusted through the ratio between extruder output, takeoff speed and BUR.

Further, preferably, the blown film has a haze of not more than 20 %, more preferably of not more than 15 % and most preferably of not more than 12.5 %.

On the blown film, tensile tests were carried out in machine direction (md) and transversal direction (td). These abbreviations are used in the following.

Preferably, the tensile modulus (md) of the blown film is at least 1300 MPa, more preferably is at least 1400 MPa and most preferably is at least 1420 MPa.

Further, preferably, the tensile stress at yield (md) of the blown film is at least 30.0 MPa, more preferably is at least 32.0 MPa and most preferably is at least 33.2 MPa.

Preferably, the tensile strain at yield (md) of the blown film is not more than 16.0 %, more preferably is not more than 15.5 %.

Preferably, the tensile strength (md) of the blown film is at least 60 MPa, more preferably is at least 63 MPa.

Further, preferably, the tensile strain at break (md) of the blown film is not more than 680 %, more preferably is not more than 660 %.

Preferably, the tensile modulus (td) of the blown film is at least 1100 MPa, more preferably is at least 1180 MPa.

Further, preferably, the tensile stress at yield (td) of the blown film is at least 25.0 MPa, more preferably is at least 27.0 MPa.

Preferably, the tensile strain at yield (td) of the blown film is not more than 10.0 %, more preferably is not more than 9.0 %.

Preferably, the tensile strength (td) of the blown film is at least 30 MPa, more preferably is at least 33 MPa.

Further, preferably, the tensile strain at break (td) of the blown film is not more than 800 %, more preferably is not more than 700 %.

Preferably, the blown film has been produced on a commercial blown-film line Alpine 35, using a screw with compression and metering zone with temperature settings 180/200/220/220/220 °C and a initial screw speed of 80 rpm. The bubble has been stretched with a blow up ratio of 2 and winded up with 10.4 m/min.

Preferably, the screw speed of the Alpine 35 was more than 90 rpm, more preferably at least 95 rpm and most preferably at least 100 rpm when processing the polypropylene composition according to the invention to obtain a film with the properties as defined above.

The invention is furthermore directed to the use of the polypropylene composition according to the invention for the production of an article, preferably for the production of a blown film.

In the following, the invention is illustrated by non-limiting examples.

### Examples

### Measurement methods:

### a) Branching index g'

The branching index g' defines the degree of branching and correlates with the amount of branches of a polymer. The branching index g' is defined as g'=[IV]_{br}/[IV]ₗᵢₙ in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949).

The intrinsic viscosity needed for determining the branching index g' is measured according to DIN ISO 1628/1, October 1999 (in Decalin at 135 °C).

### b) Particle size distribution of the catalyst

Particle size distribution is measured via Coulter Counter LS 200 at room temperature with n-heptane as medium.

### c) NMR-spectroscopy measurements/pentade analysis:

The ¹³C-NMR spectra of polypropylenes were recorded on Bruker 400 MHz spectrometer at 130 °C from samples dissolved in 1,2,4-trichlorobenzene/benzene-d₆ (90/10 w/w). For the pentad analysis the assignment is done according to the methods described in literature: (T. Hayashi, Y. Inoue, R. Chüjö, and T. Asakura, Polymer 29 138-43 (1988) and Chujo R, et al, Polymer 35 339 (1994).

### d) Molecular weight and molecular weight distribution

The weight average molecular weight M_{w} and the molecular weight distribution (MWD = M_{w}/Mₙ wherein Mₙ is the number average molecular weight and M_{w} is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/l 2,6-di-*tert-*butyl-4-methyl-phenol) as solvent at 145 °C and at a constant flow rate of 1 ml/min. 216.5 µl of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5-10 mg of polymer in 10 ml (at 160 °C) of stabilized TCB (same as mobile phase) and keeping for 3 hours with continuous shaking prior sampling in into the GPC instrument.

### e) Xylene solubles (XS, wt.-%)

2.0 g of polymer is dissolved in 250 ml p-xylene at 135 °C under agitation. After 30 minutes the solution is allowed to cool for 15 minutes at ambient temperature and then allowed to settle for 30 minutes at 25 °C. The solution is filtered with filter paper into two 100 ml flasks.

The solution from the first 100 ml vessel is evaporated in nitrogen flow and the residue is dried under vacuum at 90 °C until constant weight is reached.

XS% = (100×m×Vₒ)/(mₒ×v); mₒ = initial polymer amount (g); m = weight of residue (g); Vₒ = initial volume (ml); v = volume of analysed sample (ml).

### f) Xylene hot insolubles (XHI)

The content of xylene hot insolubles is determined by extracting 1 g of finely cut polymer sample with 500 ml xylene in a Soxleth extractor for 48 hours at the boiling temperature. The remaining solid amount is dried at 90 °C and weighed for determining the insolubles amount.

The cross-linking degree of the polyethylene component (B) is calculated by normalizing the weight percentage of xylene hot insolubles to the weight percentage of component (B).

### g) Melting temperature Tm

This has been measured with Mettler TA820 differential scanning calorimetry (DSC) according to ISO 11357-3 on 5-10 mg samples. Both crystallization and melting curves were obtained during 10 °C/min cooling and heating scans between 30 °C and 225 °C. Melting and crystallization temperatures were taken as the peaks of endotherms and exotherms.

### h) Comonomer content

This has been measured with Fourier transform infrared spectroscopy (FTIR) calibrated with ¹³C-NMR. When measuring the ethylene content in polypropylene, a thin film of the sample (thickness about 250 mm) was prepared by hot-pressing. The area of -CH₂- absorption peak (800-650 cm⁻¹) was measured with Perkin Elmer FTIR 1600 spectrometer. The method was calibrated by ethylene content data measured by ¹³C-NMR.

### i) Tensile tests, stiffness of the film in td (transversal direction) and md (machine direction)

These are determined according to ISO 527-3 on film samples having a width of 25 mm. The test temperature is 23°C. (cross head speed: 1 mm/min).

Film thickness was 50 µm and the film was produced as follows.

The pelletized materials have been used for film blowing at a commercial blown-film line Alpine 35, using a screw with compression and metering zone with temperature settings 180/200/220/220/220°C and a initial screw speed as given in the table below. The bubble has been stretched with a blow up ratio of 2 and winded up with 10.4 m/min. Already during film making it showed that the films from IE1 and IE2 behave significantly different to the known polymers. The film is much easier to process. The blown film had a thickness of 50 µm. The melt temperature was 221°C.

### k) Haze

They were determined according to ASTM D1003-92.

Film thickness was 50µm and the film was produced as described under i) above.

### l) Melt Flow Rate (MAR)

The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂₁ is measured under 21.6 kg load.

### m) Density:

Density of the polymers was measured according to ISO 1183/D on compression molded specimens.

### n) Charpy notched impact test

Charpy impact strength was determined according to ISO 179-1eA:2000 on V-notched samples having a size of 80x10x4 mm³ at +23 °C (Charpy impact strength (+23°C)) and -20 °C (Charpy impact strength (-20°C)). The base radius was 0.25 mm.

The test specimens were prepared by injection molding according to ISO 1873-2.

### o) Intrinsic viscosity

This was measured according to DIN ISO 1628/1, October 1999 in decalin at 135°C.

### p) Melt strength

A high pressure capillary rheometer (Type: Rheograph 2002, Göttfert Werkstoff-Prufmaschinen GmbH, Buchen, Germany) was used to extrudate polymer strands which were stretched by means of a Rheotens melt tension apparatus (Type: 7197, Göttfert Werkstoff-Prüfmaschinen GmbH). The haul-off force F in dependence of draw-down velocity v is recorded. The test procedure is performed in a standard climatized room with controlled room temperature of 23 °C. The temperature of the rheometer was set at 200 °C. A capillary of 20 mm length and 1 mm diameter was used. The acceleration of the wheels of the Rheotens was set to 120 mm/s² for all the measurements. The diameter of the barrel was 12 mm. The polymer was allowed to melt for 4 minutes. The extrusion rate of the strand is 0.0217 mm/s (equivalent to an apparent shear rate of 25s⁻¹). The length of the spinning line was 104 mm. The haul-off force F (in N) is measured against the stretch ratio λ. This way a curve is obtained. The maximum force before rupture of the polymer strand is called "Melt Strength".

### Polymers

### P1 (heterophasic propylene copolymer Borpac™ BC918CF distributed by Borealis), example for component (A)

The copolymer had an ethylene content of 3.6 mol% and a xylene soluble fraction (EPR content) at RT of 14 wt.%. The MFR₂ (230°C; 2.16 kg) is 3.0 g/10 min.The density was 905 kg/m³ and the melting point 167°C. The Charpy notched impact strength according to ISO 179-1eA:2000 at 23°C was 29.8 kJ/m². The weight average particle size of the disperse phase was 0.35 µm.

### P2 (multibranched propylene homopolymer., Daploy™ WB180HMS, distributed by Borealis), example for component (B)

The polymer had a density of 905 kg/m³, a melting point of 165°C. The MFR₂ (230°C; 2.16 kg) is 6.0 g/10 min. The melt strength was 11.5 cN at a maximum speed of 242 mm/s and a the branching index g' was 0.64.

### P3 (LLDPE, ethylene copolymer comprising 1-hexene, Borecene FM5220 distributed by Borealis), example for component (C)

The ethylene copolymer had an MFR₂ (190°C; 2.16 kg) of 1.3 g/10 min, a density of 922 kg/m³, a content of 1-hexene of 5.1 wt.% and a melting point of 118°C.

### P4 (LDPE homopolymer FT5230 distributed by Borealis), used in the comparative examples as replacement for component (C)

The ethylene homopolymer had an MFR₂ (190°C; 2.16 kg) of 0.75 g/10 min, a density of 923 kg/m³ and a melting point of 112°C.

### Compounding of compositions

The polypropylene compositions have been produced by melt mixing at 200-250 °C in a twin screw extruder ZSK57 (Coperion W&P, Germany), cooled in a water bath and strand pelletized. The resulting granules were fed into the film blowing machine (Alpine 35).

### production of films

The pelletized materials have been used for film blowing at a commercial blown-film line Alpine 35, using a screw with compression and metering zone with temperature settings 180/200/220/220/220°C and a initial screw speed as given in the table below. The bubble has been stretched with a blow up ratio of 2 and winded up with 10.4 m/min. Already during film making it showed that the films from IE1 and IE2 behave significantly different to the known polymers. The film is much easier to process. The blown film had a thickness of 50 µm. The melt temperature was 221°C for each polymer composition.

The contents of the used compositions and their properties are shown in table 1 below.

**table 1**

| | | | **IE 1** | **IE 2** | **CE 3** | **CE 4** | **CE 5** | **CE 6** | **CE 7** |
|---|---|---|---|---|---|---|---|---|---|
| | | **P1 [wt.%]** | **85** | **75** | **85** | **75** | **95** | **90** | **100** |
| | | **P2 [wt.%]** | **10** | **10** | **10** | **10** | | | |
| | | **P3 [wt.%]** | **5** | **15** | | | **5** | **10** | |
| | | **P4 [wt.%]** | | | **5** | **15** | | | |
| Optics | haze | % | 9.6 | 11.9 | 14.9 | 24.6 | 8.9 | 9.2 | 8.3 |
| Tensile test machine direction | tensile modulus | MPa | 1436.46 | 1430.45 | 1372.51 | 1238.06 | 1371.12 | 1301.56 | 1379.62 |
| | tensile stress at yield | MPa | 34.15 | 33.48 | 33.56 | 30.78 | 33.12 | 31.83 | 32.36 |
| | tensile strain at yield | % | 15.14 | 14.58 | 14.27 | 15.74 | 17.39 | 17.62 | 16.36 |
| | tensile strength | MPa | 64.86 | 63.39 | 64.99 | 55.14 | 69.68 | 63.85 | 63.46 |
| | tensile strain at break | % | 645.17 | 649.76 | 693.14 | 634.18 | 669.99 | 643.95 | 644.87 |
| Tensile test transversal direction | tensile modulus | MPa | 1196.03 | 1208 | 1287.95 | 1072.57 | 1164.51 | 1167.52 | 1251.14 |
| | tensile stress at yield | MPa | 29 | 27.58 | 28.68 | 24.36 | 27.2 | 26.05 | 27.72 |
| | tensile strain at yield | % | 7.81 | 8.29 | 7.83 | 8.05 | 8.69 | 7.97 | 7.61 |
| | tensile strength | MPa | 33.1 | 37.61 | 33.13 | 34.46 | 35.77 | 33.37 | 29.75 |
| | tensile strain at break | % | 507.39 | 645.43 | 463.68 | 732.54 | 632.38 | 520.13 | 317.01 |
| Throughput | screw speed | rpm | 100 | 130 | 70 | 85 | 90 | 80 | 80 |
| MFR | 230°C, 2.16 kg | g/10 min | 2.9 | 2.9 | 2.9 | 3.0 | 2.9 | 2.9 | 2.7 |

| | | | | | | | | | |
|---|---|---|---|---|---|---|---|---|---|
| IE inventive example CE comparative example | | | | | | | | | |

## Claims

1. A polypropylene composition comprising a base resin consisting of
- a first propylene homo- or copolymer (A),
- a second propylene homo- or random copolymer (B); and
- a linear low density ethylene homo- or copolymer (C) which has been produced with a single-site catalyst,
wherein
component (B) has a comonomer content of not more than 5 wt.% and a branching index g' of less than 0.9
and
components (A) and (B) are different.

2. The propylene composition according to claim 1 further **characterized in that** the amount of component (A) is at least 55 wt.% of the base resin.

3. The propylene composition according to any of the preceding claims further **characterized in that** the amount of component (B) is from 2.5 to 20.0 wt.% of the base resin.

4. The propylene composition according to any of the preceding claims further **characterized in that** the amount of component (C) is up to 25.0 wt.% of the base resin.

5. The propylene composition according to any of the preceding claims further **characterized in that** component (A) has an intrinsic viscosity (IV) of not more than 4.5 dl/g, preferably from 1.2 dl/g to 4.0 dl/g.

6. The propylene composition according to any of the preceding claims further **characterized in that** component (A) is a propylene copolymer, more preferably is a propylene copolymer with a comonomer content of not more than 10.0 wt.%, even more preferably is a propylene copolymer with a comonomer content from 1.0 to 10.0 wt.%.

7. The propylene composition to claim 6 further **characterized in that** component (A) is a propylene copolymer, preferably a heterophasic propylene copolymer (AA) comprising
- optionally a prepolymer fraction (A0).
- a propylene homopolymer or random copolymer (A1);
- a propylene/alpha-olefin copolymer rubber (A2), dispersed in the matrix phase (A1) which is preferably a propylene/ethylene copolymer rubber; and

8. The propylene composition according to any of the claims 6 or 7 further **characterized in that** the amount of component (A2) determined as xylene solubles (XS) is not more than 25 wt.% based on component (A).

9. The propylene composition according to any of the preceding claims further **characterized in that** component (A) has been alpha-nucleated.

10. The propylene composition according to any of the preceding claims further **characterized in that** component (B) is a propylene homopolymer.

11. The propylene composition according to any of the preceding claims further **characterized in that** component (B) has a melt strength of at least 5 cN at a maximum speed of at least 100 mm/s.

12. The propylene composition according to any of the preceding claims further **characterized in that** component (C) is a copolymer, preferably a copolymer with a comonomer content of not more than 10.0 wt.%.

13. A process for the production of a polypropylene composition according to any of the claims 1 to 12.

14. An article comprising the polypropylene composition according to any of the claims 1 to 12, preferably, said article is and/or comprises a blown film.

15. Use of the polypropylene composition according to any of the claims 1 to 12 for the production of an article, preferably for the production of a blown film.
